# EUROPÄISCHE PATENTSCHRIFT

(11) **EP 1 244 563 B1**
(45) Veröffentlichungstag und Bekanntmachung des Hinweises auf die Patenterteilung: **06.08.2003**
(21) Anmeldenummer: 00993598.2
(22) Anmeldetag: 06.12.2000
(51) Int. Cl.: B60H 3/00, B60H 1/00, B60J 7/057

(54) **VORRICHTUNG ZUM BELÜFTEN EINES KRAFTFAHRZEUGS**
DEVICE FOR VENTILATION OF A MOTOR VEHICLE
DISPOSITIF POUR VENTILER UN VEHICULE AUTOMOBILE

(30) Priorität: 24.12.1999 DE 19962966
(43) Veröffentlichungstag der Anmeldung: 02.10.2002
(73) Patentinhaber: ROBERT BOSCH GMBH, 70442 Stuttgart (DE)
(72) Erfinder: BOIGER, Peter, 73249 Wernau (DE)
(86) Internationale Anmeldenummer: DE0004339
(87) Internationale Veröffentlichungsnummer: WO01047731

(56) Entgegenhaltungen:
- DE-A- 3 015 072
- DE-A- 3 431 372
- FR-A- 2 172 513

## Beschreibung

### Stand der Technik

Die Erfindung geht aus von einer Vorrichtung zum Belüften eines Kraftfahrzeugs nach der Gattung des unabhängigen Anspruchs. Aus der DE-OS 29 41 305 ist eine Vorrichtung zum Belüften eines Kraftfahrzeugs bekannt, die einen Luftgütesensor zur Überwachung der Luftqualität im Innenund Außenbereich des Kraftfahrzeugs aufweist. Das vom Luftgütesensor abgegebene Signal wird mit vorgegebenen Schwellenwerten der zu detektierenden Luftkomponenten verglichen. Ein Überschreiten eines Schwellenwerts führt zum Ergreifen von Maßnahmen, wie beispielsweise das Einleiten eines Umluftbetriebes an Stelle eines Zuluftbetriebes.

Aus der DE-OS 33 24 107 ist ein in einem Kraftfahrzeug angeordneter Verstellantrieb bekannt, bei dem die Position eines Schiebedachs von einem Sollwertgeber vorgewählt werden kann.

DE-A-34 31 372 berchreibt eine Vorrichtung gemäß dem Oberbegriff des Anspruchs 1.

Der Erfindung liegt die Aufgabe zugrunde, eine Vorrichtung zum Belüften eines Kraftfahrzeugs anzugeben, die eine Verschlechterung der Luftqualität im Innenraum eines Kraftfahrzeugs weitmöglichst vermeidet.

Die Aufgabe wird durch die im unabhängigen Anspruch angegebenen Merkmale gelöst.

### Vorteile der Erfindung

Die erfindungsgemäße Vorrichtung weist den Vorteil auf, daß ein unzweckmäßiger Betriebszustand der Vorrichtung zum Belüften des Kraftfahrzeugs vermieden wird. Ein derartiger Zustand tritt beispielsweise auf, wenn der Luftgütesensor eine schlechte Luftqualität detektiert und daraufhin Gegenmaßnahmen wie beispielsweise ein Umschalten von einem Zuluft- auf einen Umluftbetrieb getroffen werden, wobei gleichzeitig aber beispielsweise ein Fenster oder ein Schiebedach geöffnet ist oder geöffnet werden soll. Erfindungsgemäß ist vorgesehen, daß ein vom Luftgütesensor bereitgestelltes Luftgütesignal und ein von einem Verstellantrieb bereitgestelltes Öffnungssignal einer UND-Verknüpfung zugeleitet sind. Wenn beide Signale gleichzeitig vorliegen, erfolgt die Betätigung einer Warneinrichtung. Der Fahrer kann nach Auftreten des Warnhinweises geeignete Gegenmaßnahmen treffen, beispielsweise einen Schließvorgang des Verstellantriebs veranlassen.

Vorteilhafte Weiterbildungen und Ausgestaltungen der erfindungsgemäßen Vorrichtung ergeben sich aus abhängigen Ansprüchen.

Eine vorteilhafte Ausgestaltung sieht vor, daß die Warneinrichtung eine Signalleuchte enthält, die vorzugsweise im Sichtfeld des Fahrers angeordnet ist. Eine andere vorteilhafte Ausgestaltung sieht vor, daß die Warneinrichtung ein akustisches Signal bereitstellt, das den Fahrer auf einen ungünstigen Betriebszustand hinweist.

Eine vorteilhafte Weiterbildung der erfindungsgemäßen Vorrichtung sieht vor, daß das Öffnungssignal von einem Positionssignal des vom Verstellantrieb zu verstellenden Teils abgeleitet ist. Eine andere vorteilhafte Weiterbildung sieht vor, daß das Öffnungssignal von einem Bediensignal des Verstellantriebs, das von einer Bedieneinrichtung abgegeben wird, abgeleitet ist.

Weitere vorteilhafte Weiterbildungen und Ausgestaltungen der erfindungsgemäßen Vorrichtung ergeben sich aus der Beschreibung.

### Zeichnung

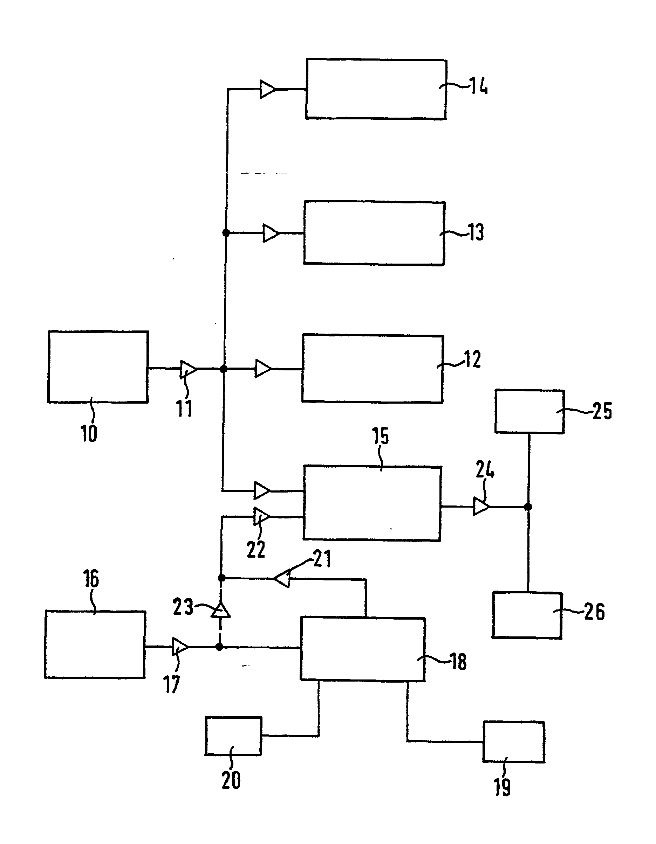

Ein Blockschaltbild einer erfindungsgemäßen Vorrichtung zum Belüften eines Kraftfahrzeugs ist in der Figur gezeigt.

Ein Luftgütesensor 10 stellt ein Luftgütesignal 11 bereit, welches das Überschreiten einer vorgegebenen Schwelle wenigstens einer zu detektierenden Luftkomponente signalisiert. Das Luftgütesignal 11 ist einer Umluftlappe 12, einem Frischlufttank 13, einem Katalysator 14 sowie einer UND-Verknüpfung 15 zugeführt.

Eine Bedieneinrichtung 16 gibt ein Bediensignal 17 an eine Verstellantrieb-Steuerung 18 ab. Die Verstellantrieb-Steuerung 18 steuert ein Schiebedach 19 und einen Fensterheber 20. Die Schiebedach-Steuerung 18 gibt ein erstes Signal 21 als Öffnungssignal 22 an die UND-Verknüpfung 15 weiter. Anstelle des ersten Signals 21 ist das strichliniert eingetragene zweite Signal 23 als Öffnungssignal 22 vorgesehen, das unmittelbar vom Bediensignal 17 abgeleitet ist. Ein Ausgangssignal 24 der UND-Verknüpfung 15 betätigt eine akustische Warneinrichtung 25 und/oder eine optische Warneinrichtung 26.

Die erfindungsgemäße Vorrichtung zum Belüften eines Kraftfahrzeugs arbeitet folgendermaßen:

Der Luftgütesensor 10 detektiert zumindest eine schädliche Luftkomponente im Außenbereich und/oder im Innenraum des Kraftfahrzeugs. Vorzugsweise ist das nicht näher gezeigte Sensorelement des Luftgütesensors in einem Ansaugkanal für Frischluft angeordnet, um so die Luftgüte der Luft im Außenbereich zu detektieren. Der Luftgütesensor gibt das Luftgütesignal 11 ab, das ein Schaltsignal sein soll. Nicht näher beschrieben ist die im Luftgütesensor 10 vorhandene Signalerfassung, die Signalaufbereitung sowie die Signalbewertung. Das Luftgütesignal 11 soll anzeigen, daß zumindest eine detektierte Luftkomponente eine Schwelle überschritten hat.

Das Luftgütesignal 11 veranlaßt beispielsweise ein Betätigen der Umluftklappe 12, die von einer Zuluftstellung in eine Umluftstellung oder umgekehrt bewegt werden soll. Das Luftgütesignal 11 kann zudem die Beimischung von Frischluft in den Innenraum des Kraftfahrzeugs veranlassen, die in dem Frischlufttank 13 vorrätig gehalten wird. Weiterhin kann das Luftgütesignal 11 im Rahmen des Umluftbetriebs den Katalysator 14 aktivieren, der eine Reinigung der umgewälzten Innenraumluft vornehmen soll.

Das Luftgütesignal 11 ist der UND-Verknüpfung 15 zugeleitet, die weiterhin das Öffnungssignal 22 zugeführt erhält.

Das Öffnungssignal 22 stammt von wenigstens einem im Kraftfahrzeug angeordneten Verstellantrieb eines beweglichen Teils der Karosserie. Im gezeigten Ausführungsbeispiel ist ein Schiebedach 19 und ein Fensterheber 20 vorgesehen. Die Verstellantriebe 19, 20 werden von der Verstellantrieb-Steuerung 18 in Abhängigkeit von dem Bediensignal 17 betätigt, das die Bedieneinrichtung 16 abgibt. Die Bedieneinrichtung 16 enthält beispielsweise einfache Kippschalter, mit denen ein Öffnungs- oder ein Schließvorgang ausgelöst werden kann. Die Bedieneinrichtung 16 kann auch eine Positionsvorwahleinrichtung aufweisen, so daß das Bediensignal 17 anstelle eines einfachen Schaltsignals ein Sollpositionssignal verkörpert.

Das Öffnungssignal 22 wird beispielsweise von der Verstellantrieb-Steuerung 18 bereitgestellt, die das Öffnungssignal 22 als erstes Signal 21 abgibt: Das erste Signal 21 ist vorzugsweise bei Verstellantrieben 19, 20 vorgesehen, bei denen die Position des zu bewegenden Teils in der Verstellantrieb-Steuerung 18 bekannt ist. Das Ist-Positionssignal innerhalb der Verstellantrieb-Steuerung 18 kann unmittelbar zur Bereitstellung des ersten Signals 21 herangezogen werden. Das erste Signal 21 wird immer dann ausgegeben, wenn die Ist-Position nicht dem geschlossenen Zustand des vom Verstellantrieb 19, 20 bewegten Teils entspricht.

Alternativ kann das öffnungssignal 22 vom Bediensignal 17 abgeleitet werden, das in diesem Fall zum zweiten Signal 23 wird. Das zweite Signal 23 ist vorzugsweise bei Verstellantrieben 19, 20 vorgesehen, die keine Positionsrückmeldung aufweisen oder bei denen die Verstellantrieb-Steuerung 18 die Ist-Position nicht anderweitig abrufbar enthält. Das zweite Signal 23 ist in diesen Fällen stets dann bereitzustellen, wenn von der Bedieneinrichtung 16 ein Öffnungswunsch ausgeht.

Das zweite Signal 23 kann aber auch bei Verstellantrieben 19, 20 vorgesehen sein, bei denen das Bediensignal 17 einer vorgegebenen Sollposition des von den Verstellantrieben 19,

20 betätigten Teils entspricht. In diesem Fall ist das zweite Signal stets dann bereitzustellen, wenn das Bediensignal 17 einer Position entspricht, die nicht dem geschlossenen Zustand des bewegten Teils entspricht.

Die UND-Verknüpfung 15 stellt das Ausgangssignal 24 dann bereit, wenn sowohl das Luftgütesignal 11 als auch das Öffnungssignal 22 die Und-Bedingungen erfüllen, also gleichzeitig vorliegen. Das Ausgangssignal 24 signalisiert demnach einen Betriebszustand der Belüftungsvorrichtung, bei dem zum einen eine schlechte Luftqualität detektiert ist und bei dem zum anderen ein geöffnetes Karosserieteil, beispielsweise ein geöffnetes Schiebedach 19 und/oder ein geöffnetes Fenster 20 vorliegt. Das Ausgangssignal 24 tritt auch dann auf, wenn zum einen das Luftgütesignal 11 vorliegt und von einer Bedienperson über die Bedienvorrichtung 16 ein Öffnungswunsch vorgegeben wird.

Das Ausgangssignal 24 wird vorzugsweise der optischen Warneinrichtung 26 zugeleitet, die beispielsweise als Leuchtanzeige im Armaturenbrett im Sichtbereich des Fahrers des Kraftfahrzeugs angeordnet ist. Ergänzend oder alternativ kann die akustische Warneinrichtung 25 vorgesehen sein. Eine aktivierte Warneinrichtung 25, 26 signalisiert dem Fahrer oder der Bedienperson des Kraftfahrzeugs einen Betriebszustand der Vorrichtung zum Belüften, der aufgrund der verschlechterten Luftqualität nicht in allen Situationen sinnvoll ist. Der Fahrer oder die Bedienperson kann an Hand des Warnhinweises selbst entscheiden, ob sie einen Schließvorgang über die Bedieneinrichtung 16 der Verstellantriebe 19, 20 veranlassen will. Anstelle des manuellen Eingriffs in die Verstellantriebe 19, 20 kann ein selbständiger Eingriff vorgesehen sein, sofern dies zulässig und/oder gewünscht ist.

## Patentansprüche

1. Vorrichtung zum Belüften eines Kraftfahrzeugs, mit einem Luftgütesensor (10), der ein Luftgütesignal (11) bereitstellt, das eine verminderte Luftqualität signalisiert, und einer Warheinrichtung (25,26) für vem minderte Luftqualität, wobei das Kraftfahrzeug einen Verstellantrieb wie beispielsweise ein Schiebedach (19) und/oder einen Fensterheber (20) enthält, **dadurch gekennzeichnet, daß** der Verstellantrieb (19, 20) ein Öffnungssignal (22) bereitstellt, daß eine UND-Verknüpfung (15) vorgesehen ist, der das Luftgüte- und das Öffnungssignal (11, 22) zugeleitet sind, und daß das Ausgangssignal (24) der UND-Verknüpfung (15) die Warneinrichtung (25, 26) betätigt.

2. Vorrichtung nach Anspruch 1, **dadurch gekennzeichnet, daß** als Warneinrichtung eine optische Warneinrichtung (26), vorzugsweise eine Leuchtanzeige im Sichtbereich des Fahrers des Kraftfahrzeugs realisiert ist.

3. Vorrichtung nach Anspruch 1, **dadurch gekennzeichnet, daß** die Warneinrichtung als akustische Warneinrichtung (25) realisiert ist.

4. Vorrichtung nach einem der Ansprüche 1 bis 3, **dadurch gekennzeichnet, daß** das Öffnungssignal (22) von einem Bediensignal (17) abgeleitet ist, das eine Sollposition des vom Verstellantrieb (19, 20) betätigten Teils vorgibt, das nicht der geschlossenen Position entspricht.

5. Vorrichtung nach einem der Ansprüche 1 bis 3, **dadurch gekennzeichnet, daß** das Öffnungssignal (22) von einem Bediensignal (17) abgeleitet ist, das einen Öffnungsvorgang des vom Verstellantrieb (19, 20) betätigten Teils veranlaßt.

6. Vorrichtung nach einem der Ansprüche 1 bis 3, **dadurch gekennzeichnet, daß** das Öffnungssignal (22) einer von einer Verstellantrieb-Steuerung (18) abrufbaren Ist-Position des vom Verstellantrieb (19, 20) betätigten Teils entspricht, das sich nicht in der geschlossenen Position befindet.

## Claims

1. Device for ventilating a motor vehicle, having an air, quality sensor (10) which makes available an air quality signal (11) which signals a reduced air quality, and a warning device (25, 26) for reduced air quality, the motor vehicle containing an adjustment drive, for example a sunroof (19) and/or a window lifter (20), **characterized in that** the adjustment drive (19, 20) makes available an opening signal (22), **in that** an AND logic element (15) to which the air quality and opening signals (11, 22) are fed is provided, and **in that** the output signal (24) of the AND logic element (15) activates the warning device (25, 26).

2. Device according to Claim 1, **characterized in that** a visual warning device (26), preferably an LED in the field of vision of the driver of the motor vehicle, is implemented as a warning device.

3. Device according to Claim 1, **characterized in that** the warning device is implemented as an audible warning device (25).

4. Device according to one of Claims 1 to 3, **characterized in that** the opening signal (22) is derived from an operator control signal (17) which predefines a set point position of the part activated by the adjustment drive (19, 20) and does not correspond to the closed position.

5. Device according to one of Claims 1 to 3, **characterized in that** the opening signal (22) is derived from an operator control signal (17) which brings about an opening process of the part activated by the adjustment drive (19, 20).

6. Device according to one of Claims 1 to 3, **characterized in that** the opening signal (22) corresponds to an actual position, which can be called by an adjustment drive controller (18), of the part which is activated by the adjustment drive (19, 20) and is not in the closed position.

## Revendications

1. Dispositif pour ventiler un véhicule automobile, avec un capteur de qualité de l'air (10) qui fournit un signal de qualité de l'air (11) qui signale une moindre qualité de l'air et avec une installation d'avertissement (25, 26) pour la moindre qualité de l'air, le véhicule contenant un entraînement de déplacement comme par exemple un toit ouvrant (19) et/ou un lève-glace (20),
**caractérisé en ce que**
l'entraînement de déplacement (19, 20) fournit un signal d'ouverture (22), on prévoit une combinaison ET (15) à laquelle est transmis le signal de qualité de l'air et le signal d'ouverture (11, 22) et le signal de sortie (24) de la combinaison ET (15) actionne l'installation d'avertissement (25, 26).

2. Dispositif selon la revendication 1,
**caractérisé en ce qu'**
en tant qu'installation d'avertissement on réalise une installation d'avertissement (26) optique, de préférence un affichage lumineux dans la zone de vision du conducteur du véhicule.

3. Dispositif selon la revendication 1,
**caractérisé en ce qu'**
en tant qu'installation d'avertissement on réalise une installation d'avertissement (25) acoustique.

4. Dispositif selon l'une des revendications 1 à 3,
**caractérisé en ce que**
le signal d'ouverture (22) est dérivé d'un signal de commande (17) qui spécifie une position théorique de la partie actionnée par l'entraînement de déplacement (19, 20) et qui ne correspond pas à la position fermée.

5. Dispositif selon l'une des revendications 1 à 3,
**caractérisé en ce que**
le signal d'ouverture (22) est dérivé d'un signal de commande (17) qui provoque une opération d'ouverture de la partie actionnée par l'entraînement de déplacement (19, 20).

6. Dispositif selon l'une des revendications 1 à 3,
**caractérisé en ce que**
le signal d'ouverture (22) correspond à une position réelle appelable par une commande (18), de la pièce actionnée par l'entraînement de déplacement (19, 20) et qui ne se trouve pas en position fermée.
